# FASCICULE DE BREVET EUROPEEN

(11) **EP 2 516 148 B1**
(45) Date de publication et mention de la délivrance du brevet: **18.06.2014**
(21) Numéro de dépôt: 10807630.8
(22) Date de dépôt: 20.12.2010
(51) Int. Cl.: B32B 5/00, D06N 3/00, E04D 5/02

(54) **MEMBRANE D'ETANCHEITE SOUPLE, NOTAMMENT POUR L'ETANCHEIFICATION DE SURFACES PLANES TELLES QUE DES TOITURES**
FLEXBLE DICHTUNGSMEMBRAN, IM BESONDEREN ZUR VERSIEGELUNG VON EBENEN FLÄCHEN WIE ETWA DÄCHER
FLEXIBLE SEALING MEMBRANE, IN PARTICULAR FOR SEALING PLANAR SURFACES SUCH AS ROOFS

(30) Priorité: 21.12.2009 FR 0959297
(43) Date de publication de la demande: 31.10.2012
(73) Titulaire: SOPREMA (SAS), 67100 Strasbourg (FR); Universite De Strasbourg (Etablissement Public à Caractère Scientifique, Culturel et Professionel), 67000 Strasbourg (FR)
(72) Inventeur: BINDSCHEDLER, Pierre, Etienne, F-67210 Obernai (FR); PERRIN, Rémi, 67530 Boersch (FR); HABLOT, Elodie, 55150 Mangiennes (FR); ROBACH, Christine, F-67270 Durningen (FR); AVEROUS, Luc, F-67370 Wiwersheim (FR); BOUQUEY, Michel, F-67120 Duttlenheim (FR)
(74) Mandataire: Nuss, Laurent
(86) Numéro de dépôt international: PCT/FR2010/052820
(87) Numéro de publication internationale: WO 2011/083247

(56) Documents cités:
- FR-A1- 2 459 810
- FR-A1- 2 912 427
- Erwin Honcoop and Eric Appelman: "Polyester Polyols for Water-Resistant Polyurethane Coatings", 30th International Waterborne, High-Solids, and Powder Coatings Symposium, February 26-28, 2003, in New Orleans , 15 juin 2003 (2003-06-15), XP002593981, Extrait de l'Internet: URL:http://www.pcimag.com/copyright/71c364 11aa6a7010VgnVCM100000f932a8c0____?view=pr int [extrait le 2010-07-27]

## Description

La présente invention concerne le domaine de l'étanchéité, notamment des constructions immobilières et de génie civil, et en particulier les produits sous forme de revêtements souples préfabriqués du type membrane d'étanchéité souple et leur procédé de fabrication.

La présente invention concerne plus particulièrement le domaine des produits d'étanchéité et d'isolation, plus particulièrement les produits sous forme de membranes ou de feuilles souples et flexibles, avec une armature fibreuse ou filamenteuse et destinées à être exposées aux agressions du milieu extérieur, de types climatique, atmosphérique et solaire (humidité, variation de température, rayonnements U.V.,...).

Actuellement, les membranes d'étanchéité, essentiellement du type bitumineuses, occupent une place prépondérante dans l'étanchéisation des supports de couvertures plans, tels que par exemple les toitures terrasses, ou les parties supérieures d'ouvrages ou de constructions.

La facilité de pose et la durabilité exceptionnelle de ce type de produits ont contribué à en faire la solution traditionnelle en matière d'étanchéité.

Depuis le début de leur mise en oeuvre, c'est-à-dire depuis la fin du XIXe siècle environ, les produits du type précité ont subi différentes modifications et évolutions, notamment au niveau de la masse liante bitumineuse imprégnant et enrobant l'âme.

Ainsi, cette masse liante consistait tout d'abord en du bitume oxydé. Puis, à partir des années 1960-1970, la masse liante était constituée d'un mélange de bitume et de polypropylène atactique (APP) et depuis 1975 environ les masses liantes à base de mélanges [bitume + polymère SBS (styrène-butadiène-styrène)] se répandent.

Toutefois, les polypropylènes atactiques sont peu compatibles avec les bitumes, ne sont pas toujours aisément disponibles en quantités importantes, présentent un comportement à chaud particulier (avec un point de fusion élevé) associé à une chute brutale de la viscosité. La tenue des joints de ce type de membrane est encore à ce jour un problème technique qui n'est pas complètement résolu.

Les polymères élastomères SBS quant à eux présentent de nombreuses propriétés avantageuses, à savoir : une élasticité élevée, une grande durabilité, une bonne ouvrabilité et une disponibilité élevée en termes de ressources.

Néanmoins, ces substances synthétiques présentent un inconvénient majeur dans le contexte des applications des produits précités, à savoir leur sensibilité aux rayonnements U.V. (ultraviolets). De ce fait, les membranes d'étanchéité à base de liant bitume/SBS soumises aux agents atmosphériques et climatiques sans protection présentent rapidement, en l'absence de couche de protection spécifique en surface, des microcraquelures (sous l'effet combiné des U.V., des variations de température et de l'humidité) qui nuisent à l'aspect esthétique, et à la pérennité des qualités d'étanchéité desdites membranes.

Les avantages et performances des membranes utilisées ont pu encore être améliorés grâce au choix réfléchi et simultané d'un liant bitumineux parfaitement formulé pour résister aux agressions climatiques et d'un renfort, ou armature, parfaitement adapté aux sollicitations mécaniques de la membrane appliquée sur son support (durabilité structurelle, résistance à la traction, au déchirement, au poinçonnement...).

L'utilisation de renforts est également bien connue depuis longtemps, en particulier au cours de la fabrication de la membrane, lorsqu'ils servent de support d'enduction du bitume appliqué à chaud (180°C environ). On comprend alors qu'un autre élément fondamental à prendre en compte est la tenue et la stabilité à la température de ces renforts, ainsi que la résistance à la déchirure et l'absence sensible de retrait.

Compte tenu de ces deux types de contraintes, deux grandes familles de renforts peuvent être mises en évidence actuellement, à savoir, les renforts à structure régulière tels que les grilles, toiles ou tissus (en verre ou polyester) et les renforts à structure aléatoire tels que les non-tissés (voile de verre, polyester en non-tissé...).

On connaît également des renforts composites formés par l'association d'une toile ou d'une grille avec un non-tissé.

Néanmoins, les membranes bitumeuses actuelles et les différents types d'armatures précités présentent des inconvénients pénalisants dans le contexte du développement durable.

En effet, ces membranes bitumeuses et ces armatures connues utilisent des matériaux dérivés des matières premières fossiles et non renouvelables, nécessitent des quantités d'énergie importantes pour leur obtention et leur transformation, et/ou sont difficilement, voire non recyclables.

Plus précisément, on peut relever les points suivants :
- utilisation de bitumes / matières plastiques synthétiques : matériaux organiques issu de la pétrochimie,
- utilisation de verre : matière première facilement recyclable mais forte consommatrice d'énergie (fusion à 1 600 °C environ).

Ces différents facteurs négatifs sont particulièrement pénalisants dans le cadre de l'ICV (Inventaire du Cycle de Vie) de produits, et confèrent à ces derniers un résultat d'ACV (Analyse du Cycle de Vie) très peu favorable.

Bien que l'utilisation de matières fibreuses d'origine naturelle semble constituer une solution possible pour la résolution du problème posé, ces matières présentent également des inconvénients majeurs tels que leur caractère hydrophile, et, en fonction de leur nature, leur durabilité et leurs performances mécaniques limitées. Compte tenu de ces différents facteurs négatifs, l'homme du métier est en fait détourné d'une possible utilisation de fibres naturelles dans le domaine de l'étanchéité.

Ce préjugé contre les fibres naturelles est renforcé par l'abandon total, il y a au moins deux décennies, de la toile de jute imprégnée de bitume comme produit d'étanchéité, du fait justement des limitations précitées qui entraînaient des pourrissements précoces, des cloquages, voire des déstructurations et des décompositions de ces toiles.

Prenant le contre-pied de ces préjugés, la présente invention propose une membrane d'étanchéité souple apte à être utilisée dans l'étanchéification de surfaces sensiblement planes telles que des toitures ou analogues, ladite membrane étant essentiellement étanche à l'eau et à la vapeur d'eau, caractérisée en ce qu'elle ne contient aucun bitume ou dérivé bitumique et en ce qu'elle est essentiellement constituée d'au moins un (co)polyuréthane thermoplastique ou un (co)polyamide thermoplastique, assurant l'essentiel desdites fonctions d'étanchéification, ledit ou lesdits (co)polyuréthanes thermoplastiques ou (co)polyamides thermoplastiques contenant chacun au moins un monomère d'origine naturelle intégré au (co)polymère cours de leurs (co)polymérisations, et caractérisée en ce qu'elle comprend en outre, dans sa matrice, un ou plusieurs éléments de renforts et/ou anti-fluage choisis dans le groupe composé par les fibres, les mats et les tissus.

Elle a également pour objet l'utilisation d'une membrane d'étanchéité souple selon l'invention pour l'étanchéification de surfaces sensiblement planes telles que des toitures, terrasses ou analogues.

L'invention sera mieux comprise, grâce à la description ci-après, qui se rapporte à des modes de réalisation préférés, donnés à titre d'exemples non limitatifs.

La présente invention a donc pour objet une membrane d'étanchéité souple apte à être utilisée dans l'étanchéification de surfaces sensiblement planes telles que des toitures ou analogues, ladite membrane étant essentiellement étanche à l'eau et à la vapeur d'eau, caractérisée en ce qu'elle ne contient aucun bitume ou dérivé bitumique et en ce qu'elle est essentiellement constituée d'au moins un (co)polyuréthane thermoplastique ou un (co)polyamide thermoplastique, assurant l'essentiel desdites fonctions d'étanchéification, ledit ou lesdits (co)polyuréthanes thermoplastiques ou (co)polyamides thermoplastiques contenant chacun au moins un monomère d'origine naturelle intégré au (co)polymère cours de leurs (co)polymérisations et caractérisée en ce qu'elle comprend en outre, dans sa matrice, un ou plusieurs éléments de renforts et/ou anti-fluage choisis dans le groupe composé par les fibres, les mats et les tissus.

Par « étanche à la vapeur d'eau », on entend les membranes présentant selon méthode A de la norme AFNOR EN 1931 du 22.10.1999 (Feuilles souples d'étanchéité, feuilles d'étanchéité de toiture bitumineuses, plastiques et élastomères, détermination des propriétés de transmission à la vapeur d'eau) une valeur de Sd > 18 m.

Par « étanche à l'eau », on entend les membranes validant la méthode A et la méthode B de la norme AFNOR EN 1928 de juillet 2000.

La méthode A de ladite norme AFNOR EN 1928 est une procédure pour feuilles devant être utilisées dans des conditions de pression faibles, par exemple dans le cas d'une toiture, sous-toiture, ou d'un pare-vapeur. L'éprouvette de matériau à tester est soumise à une pression d'eau allant jusqu'à 60 kPa pendant une durée de 24 h. Le matériau est étanche si aucune coloration du papier-filtre posée sur la surface de la feuille de matériau testé n'est visible.

La méthode B de la norme AFNOR EN 1928 est une procédure pour feuilles devant être utilisées dans des conditions de pression forte, par exemple dans le cas de toitures spéciales, tunnels et cuvelages. Une éprouvette est ainsi soumise à une pression d'eau spécifiée pendant 24 h appliquée contre une plaque comportant quatre fentes de forme de et dimensions spécifiées. On observe si l'éprouvette reste étanche. C'est le cas si la pression maximale appliquée de l'eau ne chute pas plus de 5 % par rapport à sa valeur initiale.

Le fait de n'utiliser aucun bitume ou dérivé bitumique permet notamment :
(i) d'améliorer l'analyse de cycle de vie et la fiche de données environnementales des membranes d'étanchéité,
(ii) d'être en parfaite adéquation avec la prise de conscience sociétale sur l'environnement (Grenelle de l'environnement),
(iii) d'être indépendant de l'approvisionnement et du prix de ressources fossiles,
(iv) d'utiliser des ressources renouvelables disponibles en Europe.

Par « origine naturelle », au sens de la présente invention, on entend des ressources qui s'inscrivent dans une politique de développement durable. Ce sont donc naturellement des ressources renouvelables issues de ressources végétales ou animales. Par renouvelable, on entend des cycles de renouvellement inférieurs à 100 ans.

Avantageusement, le au moins un monomère d'origine naturelle est essentiellement formé par un ou plusieurs dérivés d'huile(s) végétale(s) essentiellement constitués de dérivés d'acides gras en C₆ à C₂₄, lesdits dérivés présentant une fonctionnalité moyenne en groupements chimiques réactifs permettant une polycondensation et/ou polyaddition pour l'obtention du (co)polymère thermoplastique comprise entre 1,5 et 2,5, de préférence proche ou égale à 2.

En effet, ces composés ont l'avantage de provenir de ressources renouvelables, disponibles en quantité industrielle et à des prix compétitifs, ces composés étant, par exemple, présents en grande proportion dans les huiles de colza ou les micro-algues des familles des diatomées ou des algues vertes.

Par « fonctionnalité moyenne » on comprend le nombre d'unités réactives pour l'ensemble des molécules présentes divisé par le nombre desdites molécules.

Selon une autre caractéristique, ledit ou lesdits dérivés d'acides gras sont issus d'acides gras choisis dans le groupe formé par l'acide caprylique, l'acide caprique, l'acide caproïque, l'acide laurique, l'acide myristique, l'acide palmitique, l'acide linocérique, l'acide béhénique, l'acide arachidique et l'acide stéarique et les acides gras en C₆ à C₂₄ présentant une au moins liaison double, tels que notamment, l'acide palmitoléique, l'acide oléique, l'acide linoléique, l'acide linoléique, l'acide α-élastomérique, l'acide ricinoléique, l'acide calendique, l'acide dimorphécolique, l'acide vernoléique, l'acide érucique, l'acide nervonique, l'acide eicosénoïque, l'acide arachidonique et l'acide licanique.

Préférentiellement, ledit ou lesdits dérivés d'huiles végétales sont essentiellement issus d'huile de colza, d'huile de soja, d'huile de tournesol ou d'un mélange de celles-ci.

Selon une variante particulièrement intéressante, la membrane d'étanchéité souple selon l'invention est caractérisée en ce que le ou les monomères d'origine naturelle comprennent au moins un dimère ou mélange de dimères d'acides gras et/ou au moins un trimère ou mélange de trimères d'acides gras lesdits dimères et/ou trimères résultant d'une réaction entre 2 et/ou 3 acides gras en C₆ à C₂₄ présentant chacun au moins une liaison double et de préférence, dans le groupe formé par l'acide palmitoléique, l'acide oléique, l'acide linoléique, l'acide linoléique, l'acide α-élastomérique, l'acide ricinoléique, l'acide vernoléique, l'acide érucique, l'acide nervonique, l'acide eicosénoïque, l'acide arachidonique et l'acide licanique.

Avantageusement, les fibres ligno-cellulosiques sont utilisées pour renforcer la matrice et obtenir un matériau composite final. Ces fibres peuvent se présenter notamment sous forme de :
- de fibres courtes. Elles sont utilisées pour augmenter les performances (thermiques et mécaniques) des liants d'étanchéité. On les utilise notamment pour le polyamide dans le but d'augmenter sa température de ramollissement. Ces fibres courtes (ne dépassant pas quelques mm de longueur) peuvent être incorporées dans les matrices de liant vert par extrusion dans le but de faire des produits composites dits "compounds" qui pourront ensuite être retravaillés (par extrusion, injection, enduction/laminage, couchage...).
- de mat de fibres non tissées. Ce sont essentiellement des nappes ou voiles de fibres courtes non tissées réalisées par aiguilletage, par hydroliage, par thermoliage et/ou par liage chimique.
- de tissus de fibres continues (tissus ou textures multidirectionnelles).

Comme dans le cas des fibres courtes, les mats et les tissus sont utilisés pour renforcer la matrice et limiter son fluage lors du stockage des membranes et lorsqu'elles sont posées sur le toit.

Dans le cas de la présente invention, les mats ou tissus peuvent être introduits dans le système par extrusion filière plate, enduction/laminage ou encore couchage.

De même, la membrane d'étanchéité souple selon la présente invention est encore caractérisée en ce qu'elle contient en outre au moins un stabilisant UV (thermique et/ou photo-chimique) pour le (co)polymère thermoplastique. Elle pourra également contenir des charges classiques qui permettent de diminuer le coût, un catalyseur ou tout autre additif permettant d'améliorer ses performances initiales : feu, résistances aux racines, adhésion, souplesse ...

Ces substances sont bien connues de l'homme du métier et ne nécessitent pas plus de précisions.

Parmi les stabilisants thermiques, on pourra par exemple employer l'antioxydant thermique, phénolique, inhibiteur radicalaire, le 2,6-di-tert-butyl-4-methylphénol (ou BHT). Il pourra être ajouté dans des proportions comprises entre 0,001 % en masse et 5 % en masse dans le système, et plus préférentiellement à la hauteur de 1 % en masse. Ce stabilisant thermique peut être ajouté en fin de réaction directement dans le réacteur de synthèse ou lors de la mise en oeuvre des membranes d'étanchéité (lors de l'extrusion par exemple).

Selon une autre caractéristique, ladite membrane d'étanchéité souple est caractérisée en ce qu'elle comprend en outre des fibres végétales choisies dans le groupe formé par les fibres cellulosiques ou ligno-cellulosiques, notamment des fibres de lin, de bois, de coton, de jute, de chanvre, de bambou, de kénaf, de sisal, ainsi que les mélanges de deux ou plusieurs des différentes fibres précitées.

Selon une autre variante, ladite membrane d'étanchéité souple est caractérisée en ce qu'elle comprend en outre des fibres naturelles sous la forme de fibres en matériau(x) synthétique(s) d'origine végétale, fibres choisies, par exemple, dans le groupe formé par les fibres en viscose, les fibres synthétiques dérivées de la cellulose et les mélanges possibles de ces fibres.

Les fibres ligno-cellulosiques ont été avantageusement utilisées dans le but de rester dans une logique de développement durable. Elles sont actuellement produites en grande quantité en Europe (notamment les fibres de chanvre et de lin ou de bois).

En plus de leur origine naturelle, les fibres ligno-cellulosiques peuvent atteindre des performances mécaniques comparables aux fibres classiquement utilisées dans l'industrie telles que les fibres de verres.

Lorsqu'elles sont introduites dans la matrice, elles permettent d'augmenter les performances du matériau composite final (thermique, mécanique et thermo-mécanique) mais aussi de diminuer son poids. De plus, la recyclabilité est facilitée par l'utilisation de telles fibres, ce qui représente également un avantage considérable.

Dans un second mode de réalisation la membrane selon l'invention est caractérisée que le (co)polyamide thermoplastique est synthétisé à partir d'au moins un dimère d'acide gras avec une diamine aliphatique linéaire ou ramifiée, substituée ou non, dont la structure de base est en C₂ à C₁₂, une diamine cyclique aromatique ou non aromatique, substituée ou non, de préférence du 1,6-hexaméthylènediamine.

A titre d'exemples non limitatifs, on peut citer la 1,2-éthylènediamine, la 1,6 hexamethylènediamine, la 1,9-nonaméthylènediamine, les isomères de bis-(3-méthyl-4-aminocyclohexyl)méthane (BMACM), l'isoporonediamine (IPDA), le m-xylènediamine (MXD) et la pipérazine (Pip).

Ces diamines sont ajoutées de telle sorte à assurer un ratio-NH₂/COOH = 1.

Les polyamides sont créés par polycondensation d'un diacide et d'une diamine ajoutés en proportion stoechiométrique. La réaction a lieu en masse à des températures généralement comprises entre 110°C et 250°C et préférentiellement à 180°C, sous atmosphère inerte pour éviter toute réaction d'oxydation des réactifs et des produits de réaction.

La demande WO 2008/071894 A2 peut également être consultée à ce sujet.

De façon particulièrement utile, les fibres présentes ont été ajoutées lors de la réaction de synthèse dudit (co)polyamide.

Les fibres ont été ajoutées directement dans le réacteur de synthèse :
(i) dans le but de greffer une partie du diacide, utilisé comme réactif dans la synthèse du polyamide, sur les fonctions hydroxyles de la cellulose. Le diacide est alors utilisé comme agent de couplage (liaisons covalentes fortes avec la fibre et avec la matrice),
(ii) dans le but d'améliorer le mouillage des fibres par la matrice polyamide.

Pour ces différentes raisons, l'affinité fibres/matrice est améliorée et les propriétés (mécaniques et thermo-mécaniques) du matériau final sont également améliorées.

Selon une autre caractéristique, la membrane selon l'invention est caractérisée en ce qu'elle contient des fibres ligno-cellulosiques courtes d'environ 1 mm de longueur moyenne, extrudées dans le ou lesdits (co)polyamides, et présents à raison d'une teneur comprise entre 1 % et 15 % en masse, de préférence à hauteur de 5 % en masse par rapport auxdits (co)polyamides.

Elles permettent avantageusement d'augmenter les performances du matériau composite final (thermique, mécanique et thermo-mécanique) mais aussi de diminuer son prix et son poids.

Avantageusement, ladite membrane comprend en outre au moins un agent améliorant le caractère hydrophobe desdites fibres.

Le caractère hydrophobe des fibres a été déterminé par dépôt d'un liquide polaire (le glycérol) sur une surface de fibres pressées (200 MPa). L'évolution de l'angle observé entre le liquide et les différentes surfaces étudiées nous informe sur l'évolution de la polarité de ces dernières. De plus, grâce à la théorie dite « de Wu » (Polymer Interface Adhesion - Marcel Decker - New-York - 1982) et l'utilisation de plusieurs liquides de polarité différentes (le glycérol et le diiodométhane), il a été possible de déterminer les composantes polaire et non polaire des surfaces étudiées.

L'angle entre le glycérol et la cellulose non modifiée est déterminé à 51° ± 3°. Après le greffage, l'angle s'élève à 114° ± 1°, ce qui atteste d'une nette augmentation de l'hydrophobie des fibres testées.

De plus, d'après la théorie de Wu, la composante polaire des fibres non modifiées s'élève à 15,2 mN.m⁻¹ alors qu'elle est quasi-nulle (soit < 0,1 mN.m⁻¹) après greffage du chlorure d'acide stéarique.

Comme familles d'agents pouvant être utilisés pour augmenter le caractère hydrophobe on citera principalement les chlorures d'acides gras (cf. ci-dessous) et le traitement au fluor.

En effet, en ce qui concerne ce dernier, le caractère hydrophobe de fibres naturelles peut également être obtenu ou amélioré par cette voie là. Dans ce cas, par exemple, une nappe de non-tissé constituée à 100 % de fibres de lin et consolidée par hydroliage, est imprégnée, par exemple par foulardage, avec une solution aqueuse d'un produit connu sous la dénomination « PHOBOTEX JVA » de la société HUNTSMANN, de manière à déposer 8 g/m² de PHOBOTEX sur lesdites fibres de la nappe.

Par ailleurs, les inventeurs ont constaté qu'un tel traitement d'hydrophobation améliorait l'adhésion d'un éventuel agent liant additionnel. De préférence, le liant rapporté lors de l'opération de liage chimique des fibres végétales, est un agent liant chimique d'origine végétale, par exemple un liant choisi dans le groupe formé par les liants à base de gluten ou d'amidon, notamment de maïs.

En plus des exemples de liant d'origine végétale précités, un tel liant peut également être choisi parmi l'ester de collophane (polymère de l'acide abiétique - résine en dispersion aqueuse), la colle de soja (de nature protéinique), la caséine (de nature protéinique - matière sèche en phase aqueuse) et le latex de caoutchouc naturel (polyisoprène + protéines - en phase aqueuse).

En variante, on peut réaliser un liage ou une consolidation par traitement thermique sous pression, par exemple par calandrage à chaud, le voile non tissé étant constitué par un mélange sensiblement homogène de fibres naturelles (avec un point de fusion supérieur à 250 °C) et de fibres thermofusibles d'origine organique, à point de fusion préférentiellement compris entre 200 °C et 250 °C, le pourcentage pondéral desdites fibres thermofusibles dans le mélange étant inférieur à 20 %, préférentiellement de l'ordre d'environ 10 %.

Conformément à la présente invention, ladite membrane d'étanchéité souple est encore caractérisée en ce qu'elle comprend au moins un chlorure d'acide(s) gras, de préférence greffé chimiquement sur les structures des fibres, notamment par chromatogénie.

Ceci présente au moins deux avantages :
(i) les chlorures d'acide sont très réactifs avec les fonctions hydroxyles. Ils réagissent à température ambiante. Il est même parfois utile de refroidir le système à 0 °C (dans de la glace) pour que l'exothermie ne soit pas trop importante. Dans notre cas, la réaction a été réalisée en milieu solvanté (tétrahydrofurane) à 60 °C,
(ii) le produit de condensation est un gaz (HCl) et peut être très facilement évacué du système en réaction par un courant de gaz par exemple.

En termes de greffage de chlorure d'acide gras, on pourra notamment se référer à la demande internationale publiée sous le n° WO 2009083525 A1 et/ou à la demande européenne publiée sous le n° EP 1 007 202 A1.

Ledit greffage peut, en particulier, être effectué selon des techniques bien connues de l'homme du métier par exemple dans des conditions de solvants aprotique comme le toluène ou l'éther de pétrole en présence d'un réactif du type chlorure d'acide et d'un catalyseur de type pyridine. Le greffage peut aussi être effectué par les techniques de chimie chromatogénique (cf. EP 1 007 202 précité). Cette technique utilise également des réactifs du type chlorure d'acide mais en l'absence de solvant et de catalyseur pendant la phase de greffage. Dans les méthodes de chimie chromatogénique, le greffage est effectué à une température supérieure à la température de fusion de l'acide gras. Préférentiellement, le greffage est effectué entre 70 °C et 185 °C. Le greffage des chlorure d'acide gras est de préférence effectuée sous un balayage d'azote avec une légère dépression (900 mbar) afin d'éliminer l'acide chlorhydrique formé pendant la réaction.

Un temps de greffage de 30 secondes permet d'obtenir une amélioration significative des propriétés barrière. De préférence, le temps de greffage est inférieur à 5 minutes, préférentiellement inférieur à 2 minutes et plus préférentiellement inférieur à 1 minute. Le greffage peut donc être effectué selon différents procédés bien connus de l'homme du métier. En fonction du procédé de greffage choisi, l'homme du métier saura déterminer les conditions de réactions (quantité de réactif, temps de réaction, température, etc.) afin d'obtenir un greffage non extractibles avec un solvant organique.

De manière préférée, le ou les chlorures d'acides gras greffés sont choisis dans le groupe formé par les chlorures d'acides gras hydrophobes présentant de 6 à 24 atomes de carbone, de préférence choisis parmi le chlorure d'acide palmitique, d'acide stéarique, d'acide caprylique, d'acide caprique, d'acide caproïque, d'acide laurique, d'acide linocérique, d'acide béhénique, d'acide arachidique et/ou d'acide myristique.

Dans un autre mode de réalisation, le ou les (co)polyuréthanes thermoplastiques présents sont synthétisés en faisant réagir au moins un premier diol obtenu à partir de dimères d'acides gras condensés avec au moins un second diol, le premier diol servant à la formation du ou des (co)polyuréthanes présentant de préférence de masse moléculaire supérieure à environ 1000 g/mol et inférieure à environ 5000 g/mol, plus préférentiellement proche ou égale à 3000 g/mol, avec un diisocyanate, de préférence du méthyldiisocyanate (MDI).

Le procédé de polymérisation pourra être réalisé comme suit :

Dans une première phase de synthèse, un prépolymère est synthétisé par réaction en masse entre le diol et le diisocyanate (en excès par rapport au diol). Cette réaction a lieu sous agitation, sous atmosphère inerte, pendant 45 à 120 minutes et à une température de 80 à 90 °C. Dans une seconde phase de synthèse, le prépolymère obtenu réagit avec l'agent allongeur de chaîne en présence de catalyseur et éventuellement les autres composants. Suivant les polyols utilisés, la quantité de catalyseur et la température de mélange, la durée de réaction varie généralement entre 15 et 120 minutes. Durant la seconde phase, la température peut atteindre 180 °C pour permettre une polymérisation complète.

Le polyuréthane thermoplastique est avantageusement constitué d'un taux de segments durs (% en masse d'isocyanate + % en masse d'allongeur de chaîne) variant de 10 à 40 % et le ratio isocyanate / polyol est compris entre 1,0 et 1,1 et se situe de préférence à environ 1,05. Le catalyseur pourra être choisi parmi les catalyseur couramment utilisés dans la synthèse des polyuréthanes et connus de l'homme du métier.

Selon une autre caractéristique ladite membrane est également caractérisée en ce que ledit ou lesdits (co)polyuréthanes thermoplastiques sont synthétisés en deux étapes, une première pré-polymérisation consistant en la condensation du ou des premiers diols avec un excès de diisocyanate, suivie d'une seconde polymérisation mettant en présence le mélange réactionnel précédemment obtenu avec au moins une substance d'allongement ou allongeur de chaîne, tel que du butanediol.

L'allongeur de chaîne est avantageusement un diol de masse molaire comprise entre 50 et 500 g/mol. Les allongeurs de chaînes couramment employés sont notamment le 1,4-butanediol, l'hexanediol, le néopentylglycol, le 2-éthyl, 1,3-hexanediol.

Avantageusement, la ou les substances d'allongement de chaîne sont d'origine naturelle, de préférence végétale.

On peut ainsi utiliser des diols issus de ressources renouvelables et ayant des structure relativement linéaire avec de faibles masses molaires. On notera particulièrement le propanediol (PDO), qui peut être obtenu à partir de maïs et qui a été développé conjointement par les Sociétés Dupont et Tate & Lyle. Le Bio-PDO peut être produit par fermentation et en deux étapes : transformation du glucose en glycérol puis bioconversion par voie microbiologique du glycérol en PDO.

Enfin, la présente invention a également pour objet l'utilisation d'une membrane d'étanchéité souple selon l'invention pour l'étanchéification de surfaces sensiblement planes telles que des toitures, terrasses ou analogues.

Lorsque l'application envisagée et/ou les conditions d'enduction l'exige(nt), le procédé de fabrication de la membrane d'étanchéité souple peut consister en outre à associer au voile non tissé de fibres naturelles une structure de renfort supplémentaire, en l'intégrant dans ledit voile, lors du nappage ou lors de la consolidation, ou en le rapportant sur l'une des faces de ce dernier, ledit renfort étant également apte à être enduit ou imprégné de liant d'étanchéité, ladite structure de renfort supplémentaire étant avantageusement choisie dans le groupe formé par les grilles en verre, les grilles en polyester et les grilles en un matériau naturel, par exemple à base de fibres végétales, telles que lin, coton ou analogue.

De telles structures de renfort (en matériau synthétique), et leur procédé de fabrication et d'intégration, sont par exemple décrites dans les documents FR-A-2 792 951, EP-A-1 226 299 et EP-A-0 285 533, bien que non associées à une nappe en fibres naturelles d'origine végétale.

En outre, il peut être prévu de soumettre les fibres naturelles, avant nappage ou après obtention du voile non tissé consolidé, à un traitement supplémentaire par pulvérisation ou imprégnation, avec des agents aptes à modifier au moins certaines de leurs caractéristiques mécaniques, chimiques et/ou physiques, en augmentant notamment leur résistance au feu et au pourrissement, leurs propriétés anti-racines et anticryptogamique et leur caractère hydrophobe.

A titre d'exemples de traitements précités, on peut citer :
- antiracines : imprégnation de solutions de sel de cuivre,
- antifeu : pulvérisation en surface intumescent (demande de brevet européen n° 94110187.5 / 0 634 515),
- anticryptogamique : biocide en émulsion,
- hydrophobe : dérivés fluorés en émulsions.

EXEMPLE : La fabrication d'une membrane selon l'invention est généralement effectuée en deux étapes successives, à savoir, une première étape de réalisation de la nappe non tissée formant renfort et une étape consécutive de réalisation de la membrane elle-même.

### Réalisation préliminaire de la nappe ou mat en vue de la réalisation d'une membrane d'étanchéité selon l'invention:

### 1) Exemple 1 :

On choisit les matières premières suivantes :
- étoupe de lin, qualité E0(3), de la Société VAN ROBAEYS (longueur des fibres 80/100 mm),
- TENCEL, 1,7 dtex de la Société LENZING (38 mm de longueur de fibres).

On réalise un mélange 75/25 [étoupe de lin - Tencel].

On réalise un cardage, puis un nappage mécanique.

On introduit une grille de verre, avec des fils de 68 dtex (3 fils/cm dans les deux directions) entre les deux nappes de non tissé (Grammage de chaque nappe : 25 g/m²).

On réalise un hydroliage (deux buses d'injection travaillant à une pression de 150 bars environ).

On réalise un liage chimique avec un latex type SBR.

On réalise un séchage dans un four à 160 °C.

La nappe est ensuite enduite via un cylindre héliographie, avec 3 g/m² de chlorure d'acide stéarique, puis passée sur un cylindre chauffant à 140 °C (la sous face du cylindre étant ventilée avec de l'air à température ambiante).

Le renfort sous forme de nappe a au final un poids de 70 g/m² (contrôle qualité : test de remontée capillaire avec bleu de méthylène < 5 mm).

### 2) Exemple 2 :

On réalise un mélange d'étoupe de lin qualité E2 de la Société VAN ROBEYS et de fibres copolyester avec un point de fusion à 240 °C. Le mélange pondéral est de 25 % de fibres copolyester et de 75 % d'étoupe de lin (Grammage total 50 g/m²).

Puis, on effectue un cadrage suivi d'un nappage pneumatique.

Ensuite, un hydroliage avec 4 buses à 200 bars est appliqué à la nappe, suivi par une opération de foulardage dans une solution aqueuse de PHOBOTEX JVA de la Société HUNTSMANN afin de déposer 8 g/m² de PHOBOTEX sur les fibres.

La nappe est alors traitée dans un four de séchage à 160 °C et passe enfin dans une calandre chauffante à 250 °C et 7 bars de pression, afin de consolider la nappe thermiquement et de réduire son épaisseur à 0,8 mm.

### Réalisation du liant polyamide :

1. Le polyamide est synthétisé au préalable dans un réacteur fermé muni d'un Dean-Stark, pour récupérer l'eau issue de la réaction de condensation, et d'une arrivée d'argon ou d'azote. Des dimères d'acides gras R0970 de la société OLEON (96,6 % en masse de dimères ; 2,8 % en masse de trimères ; 0,6 % en masse de monomères) sont insérés dans le réacteur. On ajoute ensuite progressivement de la 1,6 hexamethylènediamine fournie par la société BRENNTAG. Les fonctions acides et amines sont ajoutées dans le réacteur de synthèse en proportion stoechiométrique. La réaction a lieu pendant 3h à 180°C sous atmosphère inerte. Le polyamide créé est ensuite lavé, neutralisé et désodorisé.
2. Le même protocole est suivi mais on ajoute 5 % en masse de fibres ARBOCEL B 400 de la société RETTENMAIER France dans le réacteur de synthèse avant l'ajout des réactifs de synthèse.

### Réalisation de la membrane proprement dite :

La membrane est réalisée par un procédé traditionnel de transformation des matériaux thermoplastiques en nappe souple.

On utilise une installation d'extrusion calandrage utilisant jusqu'à 4 extrudeuses (par co-extrusion ou non) dans lesquelles les formulations contenant les (co)polymères polyamide ou polyuréthane sont introduites.

Une formulation standard contient essentiellement ledit (co) polymère, des charges minérales (carbonate de calcium, noir de carbone,...) et divers additifs introduits dans l'extrudeuse.

Entre les filières d'extrusion, la nappe de renfort est déroulée et intégrée en couches superposées de type « sandwich ».

L'ensemble multicouche est ensuite calandré sur des calandres refroidissantes avant d'être enroulé.

L'épaisseur finale de la membrane est d'environ 2,0 mm.

Bien entendu, l'invention n'est pas limitée aux modes de réalisation décrits. Des modifications restent possibles, notamment du point de vue de la constitution des divers éléments ou par substitution d'équivalents techniques, sans sortir pour autant du domaine de protection de l'invention.

## Revendications

1. Membrane d'étanchéité souple apte à être utilisée dans l'étanchéification de surfaces sensiblement planes telles que des toitures ou analogues, ladite membrane étant essentiellement étanche à l'eau et à la vapeur d'eau, **caractérisée en ce qu'**elle ne contient aucun bitume ou dérivé bitumique et **en ce qu'**elle est essentiellement constituée d'au moins un (co)polyuréthane thermoplastique ou un (co)polyamide thermoplastique, assurant l'essentiel desdites fonctions d'étanchéification, ledit ou lesdits (co)polyuréthanes thermoplastiques ou (co)polyamides thermoplastiques contenant chacun au moins un monomère d'origine naturelle intégré au (co)polymère au cours de leurs (co)polymérisations et **caractérisée en ce qu'**elle comprend en outre, dans sa matrice, un ou plusieurs éléments de renforts et/ou anti-fluage choisis dans le groupe composé par les fibres, les mats et les tissus.

2. Membrane d'étanchéité souple selon la revendication 1, **caractérisée en ce que** le au moins un monomère d'origine naturelle est essentiellement formé par un ou plusieurs dérivés d'huile(s) végétale(s) essentiellement constitués de dérivés d'acides gras en C₆ à C₂₄, lesdits dérivés présentant une fonctionnalité moyenne en groupements chimiques réactifs permettant une polycondensation et/ou polyaddition pour l'obtention du (co)polymère thermoplastique comprise entre 1,5 et 2,5, de préférence proche ou égale à 2.

3. Membrane d'étanchéité souple selon la revendication 2, **caractérisée en ce que** ledit ou lesdits dérivés d'acides gras sont issus d'acides gras choisis dans le groupe formé par l'acide caprylique, l'acide caprique, l'acide caproïque, l'acide laurique, l'acide myristique, l'acide palmitique, l'acide linocérique, l'acide béhénique, l'acide arachidique et l'acide stéarique et les acides gras en C₆ à C₂₄ présentant une au moins liaison double, tels que notamment, l'acide palmitoléique, l'acide oléique, l'acide linoléique, l'acide linoléique, l'acide α-élastomérique, l'acide ricinoléique, l'acide vernoléique, l'acide calendique, l'acide dimorphécolique, l'acide érucique, l'acide nervonique, l'acide eicosénoïque, l'acide arachidonique et l'acide licanique.

4. Membrane d'étanchéité souple selon la revendication 2 ou 3, **caractérisée en ce que** ledit ou lesdits dérivés d'huiles végétales sont essentiellement issus d'huile de colza, d'huile de soja, d'huile de tournesol ou d'un mélange de celles-ci.

5. Membrane d'étanchéité souple selon l'une quelconque des revendications 1 à 4, **caractérisée en ce que** le ou les monomères d'origine naturelle comprennent au moins un dimère ou mélange de dimères d'acides gras et/ou au moins un trimère ou mélange de trimères d'acides gras lesdits dimères et/ou trimères résultant d'une réaction entre 2 et/ou 3 acides gras en C₆ à C₂₄ présentant chacun au moins une liaison double et de préférence, dans le groupe formé par l'acide palmitoléique, l'acide oléique, l'acide linoléique, l'acide linoléique, l'acide α-élastomérique, l'acide ricinoléique, l'acide vernoléique, l'acide calendique, l'acide dimorphécolique, l'acide érucique, l'acide nervonique, l'acide eicosénoïque, l'acide arachidonique et l'acide licanique.

6. Membrane d'étanchéité souple selon l'une quelconque des revendications 5, caractérisée que le (co)polyamide thermoplastique est synthétisé à partir d'au moins un dimère d'acide gras avec une diamine aliphatique linéaire ou ramifiée, substituée ou non, dont la structure de base est en C₂ à C₁₂, une diamine cyclique aromatique ou non aromatique, substituée ou non, de préférence du 1,6-hexaméthylènediamine.

7. Membrane d'étanchéité souple selon la revendication 6, **caractérisée en ce que** les fibres présentes ont été ajoutées lors de la réaction de synthèse dudit (co)polyamide.

8. Membrane d'étanchéité souple selon la revendication 7, **caractérisée en ce qu'**elle contient des fibres ligno-cellulosiques courtes d'environ 1 mm de longueur moyenne, extrudées dans le ou lesdits (co)polyamides, et présents à raison d'une teneur comprise entre 1 % et 15 % en masse, de préférence à hauteur de 5 % en masse par rapport auxdits (co)polyamides.

9. Membrane d'étanchéité souple selon la revendication 7 ou 8, **caractérisée en ce qu'**elle comprend en outre au moins un agent améliorant le caractère hydrophobe desdites fibres.

10. Membrane d'étanchéité souple selon l'une quelconque des revendications 1 à 4, **caractérisée en ce que** le ou les (co)polyuréthanes thermoplastiques présents sont synthétisés en faisant réagir au moins un premier diol obtenu à partir de dimères d'acides gras condensés avec au moins un second diol, le premier diol servant à la formation du ou des (co)polyuréthanes présentant, de préférence, une masse moléculaire supérieure à environ 1000 g/mol et inférieure à environ 5000 g/mol, plus préférentiellement proche ou égale à 3000 g/mol, avec un diisocyanate, de préférence du méthyldiisocyanate (MDI).

11. Membrane d'étanchéité souple selon la revendication 10, **caractérisée en ce que** ledit ou lesdits (co)polyuréthanes thermoplastiques sont synthétisés en deux étapes, une première pré-polymérisation consistant en la condensation du ou des premiers diols avec un excès de diisocyanate, suivie d'une seconde polymérisation mettant en présence le mélange réactionnel précédemment obtenu avec au moins une substance d'allongement ou allongeur de chaîne, tel que du butanediol.

12. Membrane d'étanchéité souple selon la revendication 11, **caractérisée en ce que** la ou les substances d'allongement de chaîne sont d'origine naturelle, de préférence végétale.

13. Utilisation d'une membrane d'étanchéité souple selon l'une quelconque des revendications précédentes pour l'étanchéification de surfaces sensiblement planes telles que des toitures, terrasses ou analogues.

## Patentansprüche

1. Flexible Dichtungsmembran, welche bei der Abdichtung im Wesentlichen ebener Flächen wie Dächern oder dergleichen verwendet werden kann, wobei die Membran im Wesentlichen dicht gegenüber Wasser und Wasserdampf ist, **dadurch gekennzeichnet, dass** sie kein Bitumen oder Bitumenderivat umfasst, dass sie im Wesentlichen mindestens ein thermoplastisches (Co)polyurethan oder ein thermoplastisches (Co)polyamid umfasst, welches die Abdichtungsfunktionenen im Wesentlichen übernimmt, wobei das oder die thermoplastischen (Co)polyurethane oder das oder die thermoplastischen (Co)polyamide jeweils mindestens ein Monomer natürlichen Ursprungs umfassen, welches in das (Co)polymer bei deren (Co)polymerisation eingebaut wurde, und die **dadurch gekennzeichnet ist, dass** sie ferner in einer Matrix ein oder mehrere Verstärkungselemente und/ oder ein Materialkriechen verhindernde Elemente umfasst, welche aus der Gruppe ausgewählt sind, die durch Fasern, Matten und Gewebe gebildet ist.

2. Flexible Dichtungsmembran nach Anspruch 1, **dadurch gekennzeichnet, dass** das mindestens eine Monomer natürlichen Ursprungs im Wesentlichen aus einem oder mehreren Derivaten eines pflanzlichen Öles/pflanzlicher Öle gebildet ist, welche im Wesentlichen aus Derivaten von C₆- bis C₂₄-Fettsäuren gebildet sind, wobei die Derivate eine mittlere Funktionalität zwischen 1,5 und 2,5, vorzugsweise nahe oder gleich 2, an chemisch reaktiven Gruppen aufweisen, die eine Polykondensation und/oder eine Polyaddition zum Erhalt des thermoplastische (Co)polymers ermöglichen.

3. Flexible Dichtungsmembran nach Anspruch 2, **dadurch gekennzeichnet, dass** das oder die Fettsäure-Derivate von Fettsäuren abstammen, welche aus der Gruppe ausgewählt sind, die gebildet ist durch: Caprylsäure, Caprinsäure, Capronsäure, Laurinsäure, Myristinsäure, Palmitinsäure, Linocerinsäure, Behensäure, Arachinsäure und Stearinsäure sowie C₆- bis C₂₄- Fettsäuren, welche mindestens eine Doppelbindung aufweisen, wie insbesondere Palmitoleinsäure, Ölsäure, Linolsäure, Linolsäure, α- elastomerische Säure, Rizinolsäure, Vernolsäure, Calendinsäure, Dimorphecolsäure, Erucasäure, Nervonsäure, Eicosensäure, Arachidonsäure und Licansäure.

4. Flexible Dichtungsmembran nach Anspruch 2 oder 3, **dadurch gekennzeichnet, dass** die Derivate pflanzlicher Öle im Wesentlichen aus Rapsöl, Sojaöl, Sonnenblumenöl oder einer Mischung derselben hervorgegangen sind.

5. Flexible Dichtungsmembran nach einem der Ansprüche 1 bis 4, **dadurch gekennzeichnet, dass** das oder die Monomere natürlichen Ursprunges mindestens ein Dimer oder eine Mischung von Dimeren von Fettsäuren und/oder mindestens ein Trimer oder eine Mischung von Trimeren von Fettsäuren umfassen, wobei die genannten Dimere und/oder Trimere das Ergebnis einer Reaktion zwischen 2 und/oder 3 C₆- bis C₂₄-Fettsäuren sind, von denen jede mindestens eine Doppelbindung aufweist und sich vorzugsweise in der Gruppe befindet, welche durch Palmitoleinsäure, Ölsäure, Linolsäure, Linolsäure, α- elastomerische Säure, Rizinolsäure, Vernolsäure, Calendinsäure, Dimorphecolsäure, Erucasäure, Nervonsäure, Eicosensäure, Arachidonsäure und Licansäure gebildet ist.

6. Flexible Dichtungsmembran nach einem der Ansprüche 1 bis 5, **dadurch gekennzeichnet, dass** das thermoplastische (Co)polyamid aus mindestens einem Fettsäure-Dimer mit einem substituierten oder unsubstituierten linearen oder verzweigten aliphatischen Diamin, das eine C₂- bis C₁₂-Grundstruktur aufweist, einem substituierten oder unsubstituierten aromatischen oder nicht-aromatischen zyklischen Diamin, vorzugsweise 1, 6-Hexamethylen-Diamin, synthetisiert wird.

7. Flexible Dichtungsmembran nach Anspruch 6, **dadurch gekennzeichnet, dass** die enthaltenen Fasern bei der Synthesereaktion des genannten (Co)polyamids hinzugegeben wurden.

8. Flexible Dichtungsmembran nach Anspruch 7, **dadurch gekennzeichnet, dass** sie kurze Lignocellulose-Fasern mit einer mittleren Länge von etwa 1 mm umfasst, die durch Extrusion in das oder die (Co)polyamide eingearbeitet sind und in einer Menge von zwischen 1 Massenprozent und 15 Massenprozent einschließlich, vorzugsweise in einer Menge von 5 Massenprozent, bezogen auf die genannten (Co)polyamide, vorliegen.

9. Flexible Dichtungsmembran nach Anspruch 7 oder 8, **dadurch gekennzeichnet, dass** sie darüber hinaus mindestens eine Komponente umfasst, welche den hydrophoben Charakter der Faser verbessert.

10. Flexible Dichtungsmembran nach einem der Ansprüche 1 bis 4, **dadurch gekennzeichnet, dass** das oder die thermoplastischen (Co)polyurethane synthetisiert werden, indem mindestens ein erstes Diol, welches ausgehend von mit mindestens einem zweiten Diol kondensierten Fettsäure-Dimeren erhalten wurde, wobei das erste Diol, welches zur Herstellung des oder der (Co)polyurethane dient, vorzugsweise eine Molekülmasse oberhalb von etwa 1 000 g/mol und unterhalb von etwa 5 000 g/mol, mehr bevorzugt nahe bei oder gleich 3 000 g/mol aufweist, mit einem Diisocyanat, vorzugsweise Methyldiisocyanat (MDI), umgesetzt wird.

11. Flexible Dichtungsmembran nach Anspruch 10, **dadurch gekennzeichnet, dass** das oder die genannten thermoplastischen (Co)polyurethane in zwei Stufen synthetisiert werden, wobei eine erste Vorpolymerisation aus der Kondensation des oder der ersten Diole mit einem Überschuss von Diisocyanat besteht, worauf eine zweite Polymerisation folgt, bei welcher man die zuvor erhaltene Reaktionsmischung mit mindestens einer Kettenverlängerungs- oder Kettenverlängerersubstanz, wie Butandiol, in Kontakt bringt.

12. Flexible Dichtungsmembran nach Anspruch 11, **dadurch gekennzeichnet, dass** die Kettenverlängerungssubstanzen natürlichen, vorzugsweise pflanzlichen Ursprungs sind.

13. Verwendung einer flexiblen Dichtungsmembran nach einem der vorherstehenden Ansprüche zum Abdichten von im Wesentlichen ebenen Oberflächen wie z. B. Dächer, Terrassen oder dergleichen.

## Claims

1. Flexible sealing membrane which can be used for sealing substantially planar surfaces such as roofs or the like, said membrane being essentially watertight and water vapour-tight, **characterised in that** it does not contain any bitumen or bitumen derivative and **in that** it consists essentially of at least one thermoplastic (co)polyurethane or thermoplastic (co)polyamide, ensuring the essential features of said sealing functions, said thermoplastic (co)polyurethane(s) or thermoplastic (co)polyamide(s) each containing at least one monomer of natural origin integrated into the (co)polymer during the (co)polymerisations thereof and **characterised in that** it also comprises, in its matrix, one or more reinforcing elements and/or anti-creep elements selected from a group comprising fibres, mats and fabrics.

2. Flexible sealing membrane according to claim 1, **characterised in that** the at least one monomer of natural origin is formed essentially by one or more derivatives of vegetable oil(s) formed essentially of derivatives of fatty acids of C₆ to C₂₄, said derivatives having an average functionality in reactive chemical groups enabling polycondensation and/or polyaddition for obtaining the thermoplastic (co)polymer of between 1.5 and 2.5, preferably close to or equal to 2.

3. Flexible sealing membrane according to claim 2, **characterised in that** said derivative or derivatives of fatty acids are derived from fatty acids selected from a group formed by caprylic acid, capric acid, caproic acid, lauric acid, myristic acid, palmitic acid, lignoceric acid, behenic acid, arachidic acid and stearic acid and fatty acids in C₆ to C₂₄, having at least one double bond, such as in particular palmitoleic acid, oleic acid, linoleic acid, linoleic acid, α-elastomeric acid, ricinoleic acid, vernoleic acid, calendic acid, dimorphecolic acid, erucic acid, nervonic acid, eicosenoic acid, arachidonic acid and licanic acid.

4. Flexible sealing membrane according to claim 2 or 3, **characterised in that** said derivative or derivatives of vegetable oils is/are derived essentially from colza oil, soya oil, sunflower oil or a mixture thereof.

5. Flexible sealing membrane according to any one of claims 1 to 4, **characterised in that** the monomer or monomers of natural origin comprise at least one dimer or mixture of dimers of fatty acids and/or at least one trimer or mixture of trimers of fatty acids, said dimers and/or trimers resulting from a reaction between 2 and/or 3 fatty acids in C₆ to C₂₄, each having at least one double bond and preferably from a group formed by palmitoleic acid, oleic acid, linoleic acid, linoleic acid, α-elastomeric acid, ricinoleic acid, vernoleic acid, calendic acid, dimorphecolic acid, erucic acid, nervonic acid, eicosenoic acid, arachidonic acid and licanic acid.

6. Flexible sealing membrane according to claim 5, **characterised in that** the thermoplastic (co)polyamide is synthesised from at least one dimer of fatty acid with a substituted or non-substituted linear or ramified aliphatic diamine, the base structure of which is in C₂ to C₁₂, a substituted or non-substituted aromatic or non-aromatic cyclic diamine, preferably 1,6-hexamethylene diamine.

7. Flexible sealing membrane according to claim 6, **characterised in that** the fibres present are added during the synthesis reaction of said (co)polyamide.

8. Flexible sealing membrane according to claim 7, **characterised in that** it contains short ligno-cellulose fibres with an average length of about 1 mm, extruded into the (co)polyamide or (co)polyamides, and being present with a content of between 1% and 15% by mass, preferably in an amount of 5 % by mass in relation to said (co)polyamides.

9. Flexible sealing membrane according to claim 7 or 8, **characterised in that** it also comprises at least one agent improving the hydrophobic nature of said fibres.

10. Flexible sealing membrane according to any one of claims 1 to 4, **characterised in that** the thermoplastic (co)polyurethane or (co)polyurethanes present are synthesised by reacting at least one first diol obtained from dimers of condensed fatty acids with at least one second diol, the first diol being used for the formation of (co)polyurethane or (co)polyurethanes preferably having a molecular mass or more than about 1,000 g/mol and less than about 5,000 g/mol, more preferably close to or equal to 3,000 g/mol, with a diisocyanate, preferably methyl diisocyanate (MDI).

11. Flexible sealing membrane according to claim 10, **characterised in that** said thermoplastic (co)polyurethane or (co)polyurethanes are synthesised in two stages, a first pre-polymerisation consisting of condensing the first diol or diols with an excess of diisocyanate, followed by a second polymerisation bringing together the previously obtained reaction mixture with at least one extending substance or chain extender, such as butanediol.

12. Flexible sealing membrane according to claim 11, **characterised in that** the chain extending substance or substances are of natural origin, preferably vegetable origin.

13. Use of a flexible sealing membrane according to any one of the preceding claims for sealing substantially planar surface such as roofs, terraces or the like.
